# EUROPEAN PATENT APPLICATION

(11) **EP 2 963 769 A1**
(43) Date of publication of application: **06.01.2016**
(21) Application number: 14175823.5
(22) Date of filing: 04.07.2014
(51) Int. Cl.: H02J 9/06, H02J 3/06, H02J 4/00, B63J 3/02, B63J 3/00

(54) **Power system for offshore vessels**

(71) Applicant: Siemens Aktiengesellschaft, 80333 München (DE)
(72) Inventor: Van Ravens, Rune, 1480 Slattum (NO)
(74) Representative: Maier, Daniel Oliver

(57) **Abstract**

There is described a power system (100) for dynamically positioned offshore vessels (201). The system (100) comprises (a) a first segregated power generating unit (111), (b) a first set of segregated switchboard units (121, 122), wherein each segregated switchboard unit (121, 122) of the first set is coupled to the first segregated power generating unit (111), and wherein each segregated switchboard unit (121, 122) of the first set is adapted to distribute power to a corresponding segregated group of consumers (141, 142), (c) a second segregated power generating unit (112), and (d) a second set of segregated switchboard units (123, 124), wherein each segregated switchboard unit (123, 124) of the second set is coupled to the second segregated power generating unit (112), and wherein each segregated switchboard unit (123, 124) of the second set is adapted to distribute power to a corresponding segregated group of consumers (144, 145), wherein (e) the switchboard units (121, 122) of the first set of switchboard units and the switchboard units (123, 124) of the second set of switchboard units are electrically interconnected in a closed ring configuration. Further, a dynamically positioned offshore vessel (201) and a method of distributing power to consumers on such a vessel are described.

## Description

### Field of Invention

The present invention relates to the field of offshore vessels, in particular to power systems for dynamically positioned offshore vessels, dynamically positioned offshore vessels comprising such power systems, and a method of distributing power to consumers on a dynamically positioned offshore vessel.

### Art Background

Dynamically positioned offshore vessels (e.g. ship shaped vessels, monohulls, semi-submersible vessels, barges, etc.) which are to operate on a location by use of thrusters (i.e. without being moored or anchored), are required by rules and regulations to have power systems with built-in redundancy in order to be able to maintain position even after occurrence of a fault. To limit the consequences of a fault from taking out thrusters and power sources beyond what is required to maintain position, the power sources and thrusters (including their respective auxiliary systems) are usually segregated in sections and compartments. This ensures that only a limited portion of the power sources and thrusters are lost in case of a single fault. However, this approach requires the vessels to have significant overcapacity in terms of thrusters and power sources. Such overcapacity increases the cost of construction and of operating a vessel, adds weight to the vessel and occupies a significant amount of space on the vessel.

Typically, the vessels are split into 2, 3 or 4 segregated and independent sections, which consequently need to have a spare capacity of 50%, 33% or 25%. Each segregated section is independent of others acc. rules and regulations. The higher the number of sections, the lower is the portion of the overall capacity that can be lost in case of a fault. Thus, a high number of sections reduces the required overcapacity per section, which increases costs, weight and space requirements for each section. However, the total costs increase with the number of segregated sections. In particular, additional machinery rooms are costly due to auxiliary systems. Full segregation of the sections throughout the vessel, including e.g. cable routing and piping, further adds to cost and complexity. Accordingly, the number of segregated sections is limited by considerations regarding the overall cost of the vessel.

Traditionally, the power systems have been operated with open bus-ties (i.e. with isolated power sections) with one switchboard for each machinery room. Such a configuration is e.g. described in EP 2 654 157 A1 and will hereafter referred to as 1:1 configuration).

IMO (International Maritime Organisation) Class 3 (and corresponding classification rules like e.g. DnV DYNPOS AUTRO, ABS DPS-3), hereafter referred to as DP3, sets the most stringent redundancy requirements by taking into account fire or flooding of complete compartments. Consequently, for the above mentioned 1:1 configuration, the worst case fault scenario in case of fire or flooding is normally loss of one of the main switchboards and consequently loss of all corresponding power generation sources (e.g. diesel engines) and thrusters fed from that switchboard.

There may thus be a need for an improved power system with increased redundancy which can be realized in a cost-efficient manner.

### Summary of the Invention

This need may be met by the subject matter according to the independent claims. Advantageous embodiments of the present invention are described by the dependent claims.

According to a first aspect of the invention there is provided a power system for dynamically positioned offshore vessels. The system comprises (a) a first segregated power generating unit, (b) a first set of segregated switchboard units, wherein each segregated switchboard unit of the first set is coupled to the first segregated power generating unit, and wherein each segregated switchboard unit of the first set is adapted to distribute power to a corresponding segregated group of consumers, (c) a second segregated power generating unit, and (d) a second set of segregated switchboard units, wherein each segregated switchboard unit of the second set is coupled to the second segregated power generating unit, and wherein each segregated switchboard unit of the second set is adapted to distribute power to a corresponding segregated group of consumers, wherein (e) the switchboard units of the first set of switchboard units and the switchboard units of the second set of switchboard units are electrically interconnected in a closed ring configuration.

This aspect of the invention is based on the idea that each segregated power generating unit is coupled to a set of segregated switchboard units (i.e. two or more independent and separated switchboard units), where each segregated switchboard unit is adapted to distribute power to a corresponding segregated group of consumers (i.e. devices that require electrical power to operate, such as thrusters, drills, etc.), and wherein all switchboard units are electrically connected in a closed ring configuration. Thereby, if one of the switchboard units fail (e.g. due to flooding or fire), only the group of consumers corresponding to this switchboard unit will be lost while, if one of the power generating units is lost, all consumers may continue to operate as the corresponding switchboard units may receive power from the remaining power generating unit through the closed ring configuration. Accordingly, by having a set of segregated switchboard units coupled to each power generating unit, this aspect of the invention provides a power system in which a lower number of consumers are lost in case of a failure in a switchboard unit than in a conventional 1:1 configuration where all consumers fed from a given power generating unit will be lost in case of a failure in the corresponding (single) switchboard unit. Thus, this aspect of the present invention actually provides an increased degree of segregation without the need for an increase in the number of segregated power generating units, thus at a considerably lower price than that of a 1:1 configuration with similar degree of segregation.

In the present context, the term "segregated unit" may in particular denote that the unit is separate from and independent from other units in such a way that critical circumstances (e.g. flooding or fire) will not spread from one segregated unit to another.

In the present context, the term "power generating unit" may in particular denote a unit capable of producing electrical power, e.g. by means of one or more engines or generators.

In the present context, the term "switchboard unit" may in particular denote a unit capable of controlling distribution of power to a number of power consuming units connected to the switchboard unit.

In the present context, the term "closed ring configuration" may in particular denote a configuration where all switchboard units are connected to a bus forming a closed ring (or loop). In other words, the "closed ring configuration" denotes that the power system operates with closed bus ties. Accordingly, any switchboard unit in the system may receive power from any power generating unit of the system.

The power system according to this aspect may be particularly useful on a vessel with groups of thrusters arranged at various positions on the vessel, e.g. as a group of rear (aft) thrusters and a group of front thrusters. In particular, a part of the front thrusters may be powered from a switchboard unit in the first set of segregated switchboard units while another part of the front thrusters are powered from a switchboard in the second set of segregated switchboard units. Similarly, a part of the rear thrusters may be powered from a switchboard unit in the first set of segregated switchboard units while another part of the rear thrusters are powered from a switchboard in the second set of segregated switchboard units. In this configuration, only a part of the front thrusters or a part of the rear thrusters will be lost in a worst case scenario (i.e. front and rear thrusters will not be lost at the same time as it is usually the case in 1-1 configuration systems).

According to an embodiment of the invention, (a) the first segregated power generating unit comprises a first plurality of generators, and (b) each segregated switchboard unit of the first set of segregated switchboard units is connected to at least one generator of the first plurality of generators. Furthermore, (c) the second segregated power generating unit comprises a second plurality of generators, and (d) each segregated switchboard unit of the second set of segregated switchboard units is connected to at least one generator of the second plurality of generators.

In other words, during normal operation (i.e. when all generators and switchboard units are functioning correctly), each switchboard unit may receive power from at least one dedicated generator of the corresponding power generation unit. In case the at least one dedicated generator (or the entire corresponding power generation unit) cannot operate correctly, a given switchboard unit may receive power from other generators due to the closed loop configuration.

According to a further embodiment of the invention, the system further comprises (a) a third segregated power generating unit, and (b) a third set of segregated switchboard units, wherein each segregated switchboard unit of the third set is coupled to the third segregated power generating unit, and wherein each segregated switchboard unit of the third set is adapted to distribute power to a corresponding segregated group of consumers. The switchboard units of the first, second and third set of switchboard units are electrically interconnected in a closed ring configuration.

In this embodiment, the power system comprises three segregated power generation units and three sets of segregated switchboard units. Each set of segregated switchboard units is coupled to one segregated power generation unit and is furthermore adapted to distribute power to a corresponding segregated group of consumers. That is, there are as many segregated groups of consumers as there are segregated switchboard units. As above, all switchboard units are electrically connected in a closed ring configuration.

The power system according to this embodiment may be particularly advantageously implemented on a vessel having three rear (aft) thrusters (or groups of rear thrusters) and three front thrusters (or groups of front thrusters) that are respectively arranged on the left-hand side, centrally, and on the right hand side relative to the length axis of the vessel. In particular, the power system may assure that not both the front and rear thrusters are lost in case of failure on the left-hand side, centrally, or on the right-hand side.

According to a further embodiment of the invention, (a) the third segregated power generating unit comprises a third plurality of generators, and (b) each segregated switchboard unit of the third set of segregated switchboard units is connected to at least one generator of the third plurality of generators.

Also in this embodiment (see above), each switchboard unit will receive power from at least one dedicated generator of the corresponding power generation unit during normal operation (i.e. when all generators and switchboard units are functioning correctly). In case the at least one dedicated generator (or the entire corresponding power generation unit) cannot operate correctly, a given switchboard unit may receive power from other generators due to the closed loop configuration.

It is explicitly noted that, although the above embodiments specify two or three segregated power generation units and sets of segregated switchboard units, the principles of the present invention are equally applicable to power systems comprising four (or any higher number of) segregated power generation units as well as four (or any higher number of) sets of segregated switchboard units.

According to a further embodiment of the invention,(a) each segregated power generating unit comprises two generators, (b) each set of segregated switchboard units comprises two segregated switchboard units, and (c) each segregated switchboard unit is coupled to one corresponding generator.

According to a second aspect of the invention, there is provided a dynamically positioned offshore vessel. The vessel comprises (a) a plurality of consumers arranged in a plurality of segregated groups, and (b) a power system according to the first aspect or any of the above embodiments, wherein each segregated switchboard unit is adapted to deliver power to consumers included in one of the plurality of segregated groups.

This aspect of the present invention is based on the same idea as the first aspect described above. More specifically, this aspect relates to a vessel equipped with a power system according to the first aspect.

According to an embodiment of the invention, the plurality of consumers comprises thrusters and/or power consuming tools arranged at predetermined positions within the vessel.

The thrusters may in particular be arranged as left, central and right front (groups of) thrusters and as left, central and right aft (groups of) thrusters on the vessel. Each of these thrusters may beneficially be individually supplied by one of the switchboard units of the power system, in particular in such a manner that corresponding front and rear thrusters are respectively supplied by switchboard units of one set of segregated switchboard units.

According to a third aspect of the invention, there is provided a method of distributing power to consumers on a dynamically positioned offshore vessel. The method comprises (a) providing a first segregated power generating unit, (b) providing a first set of segregated switchboard units, wherein each segregated switchboard unit of the first set is coupled to the first segregated power generating unit, and wherein each segregated switchboard unit of the first set is adapted to distribute power to a corresponding segregated group of consumers, (c) providing a second segregated power generating unit, (d) providing a second set of segregated switchboard units, wherein each segregated switchboard unit of the second set is coupled to the second segregated power generating unit, and wherein each segregated switchboard unit of the second set is adapted to distribute power to a corresponding segregated group of consumers, and (e) electrically interconnecting the switchboard units of the first set of switchboard units and the switchboard units of the second set of switchboard units in a closed ring configuration.

The method according to this aspect is essentially based on the same idea as the first and second aspects described above. More specifically, the method results in establishment of a power system for a vessel as described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a schematic view of a power system in accordance with an embodiment.
Figure 2 shows a schematic view of thruster allocation on a vessel.
Figure 3 shows another schematic view of a part of the power system in accordance with the embodiment shown in Figure 1.

### Detailed Description

The illustration in the drawing is schematic. It is noted that in different figures, similar or identical elements are provided with the same reference numerals or with reference numerals which differ only within the first digit.

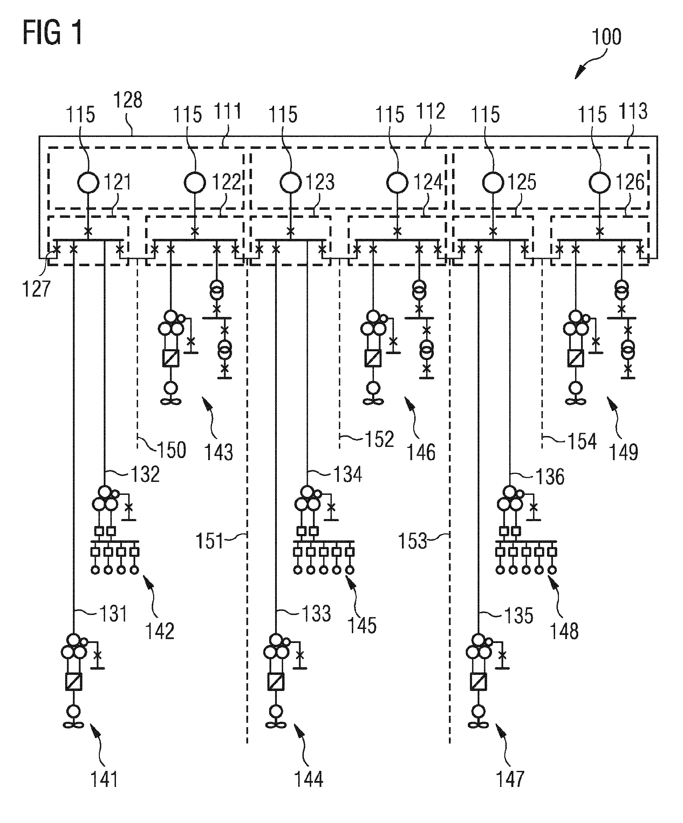

Figure 1 shows a schematic view of a power system 100 in accordance with an embodiment. More specifically, the power system 100 comprises a first segregated power generating unit 111, a second segregated power generating unit 112, and a third segregated power generating unit 113. Each of the segregated power generating units 111, 112, 113 comprises two generators 115. The power system 100 further comprises a first set of segregated switchboard units 121, 122, a second set of segregated switchboard units 123, 124, and a third set of segregated switchboard units 125, 126. Each segregated switchboard unit 121, 122 in the first set is respectfully coupled to one of the two generators 115 in the first power generating unit 111. Similarly, each segregated switchboard unit 123, 124 in the second set is respectfully coupled to one of the two generators 115 in the second power generating unit 112. Finally, each segregated switchboard unit 125, 126 in the third set is respectfully coupled to one of the two generators 115 in the third power generating unit 113.

Each switchboard unit 121, 122, 123, 124, 125, 126 comprises an internal bus and a number of circuit breakers 127 (depicted as "x"). The switchboard units 121, 122, 123, 124, 125, 126 are interconnected by means of bus ties and cable 128 to form a closed ring configuration. Furthermore, each switchboard unit 121, 122, 123, 124, 125, 126 is connected to its own segregated group of consumers. That is, the switchboard unit 121 is connected to thruster 141 (via cable 131) and to drilling equipment 142 (via cable 132). The switchboard unit 122 is a.o. connected to thruster 143. Similarly, the switchboard unit 123 is connected to thruster 144 (via cable 133) and to drilling equipment 145 (via cable 134). The switchboard unit 124 is a.o. connected to thruster 146. Finally, the switchboard unit 125 is connected to thruster 147 (via cable 135) and to drilling equipment 148 (via cable 136). The switchboard unit 126 is a.o. connected to thruster 149. The consumer groups connected to each of the switchboard units 321, 322, 323, 324, 325, and 326 are segregated as indicated by dashed lines 150, 151, 152, 153, and 154.

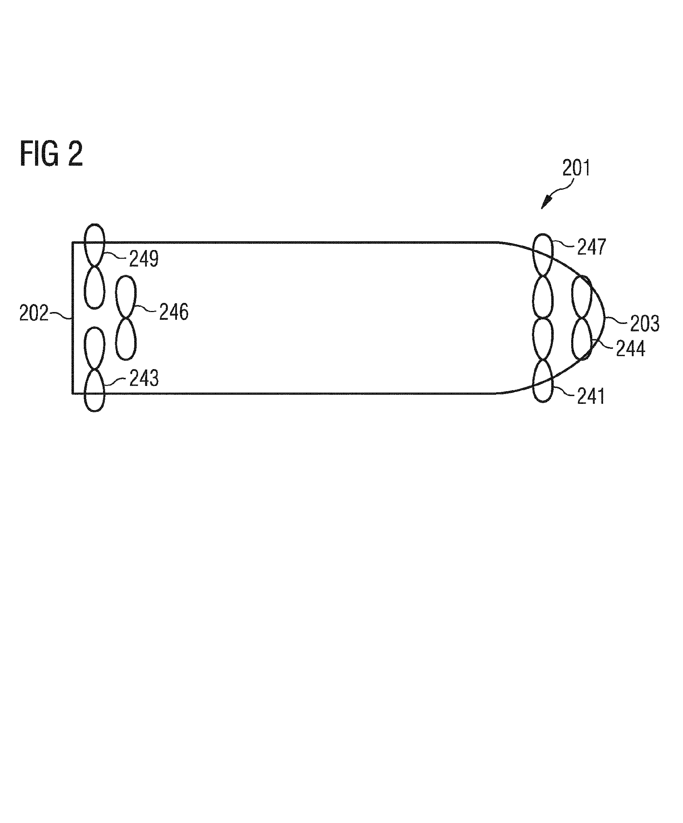

Figure 2 shows a schematic view of thruster allocation on a vessel 201. More specifically, Figure 2 shows a vessel having a rear (or aft) end 202 and a front end 203. At the rear end 202, a rear right thruster 243, a central rear thruster 246 and a left rear thruster 249 are arranged. At the front end 203 of the vessel 201, a front right thruster 241, a central front thruster 244 and a left front thruster 247 are arranged.

Returning to Figure 1, it can be seen that the front thrusters 141, 144, and 147 are respectively coupled to the switchboard units 121, 123, and 125. Furthermore, the rear thrusters 143, 146, and 149 are respectively coupled to the switchboard units 122, 124, and 126. Accordingly, if a failure or malfunction occurs in one of the switchboard units 121, 122, 123, 124, 125, and 126, only the corresponding one of the thrusters 141, 143, 144, 146, 147, and 149 will be lost. If, on the other hand, one of the power generating units 111, 112, and 123 fails, the thrusters 141, 143, 144, 146, 147, and 149 as well as the drilling equipment 124, 145, and 148 can continue to operate as the closed ring configuration assures that the remaining power generating units can still receive power via their respective switchboard units.

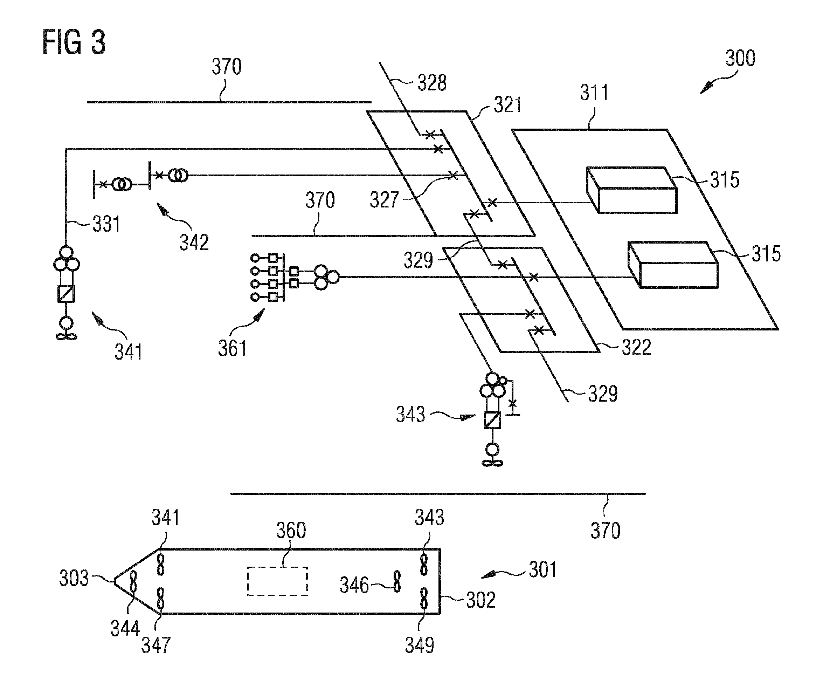

Figure 3 shows another schematic view of a part of the power system 300 in accordance with the embodiment shown in Figure 1. More specifically, the upper part of Figure 3 shows only the first segregated power generating unit 311 comprising the generators 315, and the first set of switchboard units 321, 322. That is, the switchboard unit 321 supplies power to the front right thruster 341 via cable 331 and to mid-ship drilling equipment 342. Similarly, the switchboard unit 322 supplies power to the left right thruster 343 and to mid-ship drilling equipment 361. The switchboard units 321 and 322 are interconnected by bus tie 329 and the switchboard unit 322 is connected to a further bus tie providing connection to the next switchboard unit (not shown) in the closed ring configuration. The power generating unit 311 and each of the switchboard units 321, 322 are segregated such that flooding fire in one of them will not directly impact the others. The consumers 341 and 342 powered via switchboard 321 are segregated from the consumers 361 and 343 powered by switchboard unit 322 by protective walls 370. Furthermore, the segregation may be improved by arranging the various parts (power generating unit 311, switchboard units 321, 322, and consumers 341, 342, 361, and 343) on different levels (i.e. at different heights relative to the surface of the sea) within the vessel.

The lower part if Figure 3 is similar to Figure 2 but also shows the drilling equipment 360 that is arranged mid-ship.

The power system of the present invention as exemplified by the embodiments 100, 300 of Figures 1 and provides an improved segregation at a reasonable cost as the number of segregated power generating units is not increased in comparison to a standard 1:1 configuration.

However, the invention provides a number of further benefits:
(1) Reduction of required overcapacity (built in capacity) is possible as the worst case failure scenario is improved. This may e.g. be used to reduce the rating of thrusters. In the above exemplary embodiment with three splits, the worst case loss of one thruster out of six (rather than two thrusters out of six) reduces the required spare capacity of each thruster by 20% (5 vs 4). If the same rating of the thrusters (as in a 1:1 configuration) is maintained, the vessel will have a significant improvement as regards the weather conditions during which it can maintain operation.
(2) If the thruster rating is reduced, corresponding direct reductions with regard to weight, dimensions/space and cost are obtained. These can be critical for an offshore vessel. By reducing the rating of the mechanical thrusters, the electrical equipment and power cables will be equally reduced as regards space, weight and cost.
(3) Reduced fault consequences improves operational flexibility and increases the days per the year where one thruster can be taken out of operation for inspection and maintenance.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A power system for dynamically positioned offshore vessels, the system comprising
a first segregated power generating unit,
a first set of segregated switchboard units, wherein each segregated switchboard unit of the first set is coupled to the first segregated power generating unit, and wherein each segregated switchboard unit of the first set is adapted to distribute power to a corresponding segregated group of consumers,
a second segregated power generating unit, and
a second set of segregated switchboard units, wherein each segregated switchboard unit of the second set is coupled to the second segregated power generating unit, and wherein each segregated switchboard unit of the second set is adapted to distribute power to a corresponding segregated group of consumers,
wherein the switchboard units of the first set of switchboard units and the switchboard units of the second set of switchboard units are electrically interconnected in a closed ring configuration.

2. The system according to the preceding claim,
wherein the first segregated power generating unit comprises a first plurality of generators,
wherein each segregated switchboard unit of the first set of segregated switchboard units is connected to at least one generator of the first plurality of generators,
wherein the second segregated power generating unit comprises a second plurality of generators, and
wherein each segregated switchboard unit of the second set of segregated switchboard units is connected to at least one generator of the second plurality of generators.

3. The system according to any of the preceding claims, further comprising
a third segregated power generating unit, and
a third set of segregated switchboard units, wherein each segregated switchboard unit of the third set is coupled to the third segregated power generating unit, and wherein each segregated switchboard unit of the third set is adapted to distribute power to a corresponding segregated group of consumers,
wherein the switchboard units of the first, second and third set of switchboard units are electrically interconnected in a closed ring configuration.

4. The system according to the preceding claim,
wherein the third segregated power generating unit comprises a third plurality of generators, and
wherein each segregated switchboard unit of the third set of segregated switchboard units is connected to at least one generator of the third plurality of generators.

5. The system according to any of the preceding claims,
wherein each segregated power generating unit comprises two generators,
wherein each set of segregated switchboard units comprises two segregated switchboard units, and
wherein each segregated switchboard unit is coupled to one corresponding generator.

6. A dynamically positioned offshore vessel, the vessel comprising
a plurality of consumers arranged in a plurality of segregated groups, and
a power system according to any of the preceding claims, wherein each segregated switchboard unit is adapted to deliver power to consumers included in one of the plurality of segregated groups.

7. The vessel according to the preceding claim, wherein the plurality of consumers comprises thrusters and/or power consuming tools arranged at predetermined positions within the vessel.

8. A method of distributing power to consumers on a dynamically positioned offshore vessel, the method comprising
providing a first segregated power generating unit,
providing a first set of segregated switchboard units, wherein each segregated switchboard unit of the first set is coupled to the first segregated power generating unit, and wherein each segregated switchboard unit of the first set is adapted to distribute power to a corresponding segregated group of consumers,
providing a second segregated power generating unit,
providing a second set of segregated switchboard units, wherein each segregated switchboard unit of the second set is coupled to the second segregated power generating unit, and wherein each segregated switchboard unit of the second set is adapted to distribute power to a corresponding segregated group of consumers, and
electrically interconnecting the switchboard units of the first set of switchboard units and the switchboard units of the second set of switchboard units in a closed ring configuration.
